# EUROPÄISCHE PATENTANMELDUNG

(11) **EP 4 574 565 A1**
(43) Veröffentlichungstag der Anmeldung: **25.06.2025**
(21) Anmeldenummer: 24020345.5
(22) Anmeldetag: 12.12.2024
(51) Int. Cl.: B60N 3/00, B60N 3/10

(54) **ABSTELLANLAGE FÜR EIN KRAFTFAHRZEUG**

(30) Priorität: 19.12.2023 CZ 20230499
(71) Anmelder: Skoda Auto a.s., 29301 Mladá Boleslav (CZ)
(72) Erfinder: Giblo, Vladislav, CZ-47301 Nový Bor (CZ)

(57) **Zusammenfassung**

Die Abstellanlage für ein Kraftfahrzeug umfassend ein Trägerteil, einen Halter und einen Tisch. Der Halter umfasst einen Boden (3) für eine Aufnahme (8), eine Trennwand (2) und ein Bein (4) zum Stützen des Tisches, wobei die Trennwand (2) an einer Seite des Bodens (3) und das Bein (4) an der anderen Seite des Bodens (3) befestigt ist. Der Tisch umfasst eine Platte (6). Das Bein (4) und die Tischplatte (6) sind abnehmbar verbindbar. Das Trägerteil umfasst eine Aufnahme (8). Die Aufnahme (8) und die Trennwand (2) umfassen ein Führungselement (12) der Aufnahme, bzw. ein Führungselement (11) des Halters. Diese beiden Führungselemente sind gleitend miteinander verbunden. Bei Ansicht in der von den Führungselementen definierten Bewegungsrichtung ragen alle Führungselemente (11) des Halters in mindestens einer Richtung das Bein (4) über. Bei der gleichen Ansicht sind die Abmessungen der Aufnahme gleich oder größer als die Abmessungen des Beins (4). Die einzelnen Komponenten der Abstellanlage sind in zwei Konfigurationen zusammenstellbar, eine Tischkonfiguration und eine Getränkehalterkonfiguration.

## Beschreibung

### Technisches Sachgebiet

Die Erfindung betrifft einen Abstellraum zum Beispiel für eine Erfrischung der Besatzung eines Fahrzeugs. Konkret geht es um einen Getränkehalter mit der Möglichkeit, einen Tisch zu befestigen.

### Stand der Technik

Aus dem Stand der Technik sind Getränkehalter für die Besatzung eines Kraftfahrzeugs bekannt, die in verschiedenen Positionen angebracht sind. In diese Halter können verschiedene Aufsätze eingesetzt werden, um den Tisch zu befestigen. So beschreibt das Dokument US20230127076 A1 einen Aufsatz, der in zwei Aussparungen eines Getränkehalters montiert werden kann, wobei der Aufsatz als Ablagefläche dient, wenn er in den Getränkehalter eingesetzt ist.

Ein Nachteil des Standes der Technik ist die komplizierte Form der Adapter, die am Getränkehalter befestigt werden, sowie der damit verbundene Platzbedarf. Es wäre daher geeignet, eine Lösung zu finden, die die Vorteile eines in einem Getränkehalter montierbaren Tisches bietet, gleichzeitig aber einfach in der Form und leicht zu verstauen ist.

### Zusammenfassung der Erfindung

Die Mängel der im Stand der Technik bekannten Lösungen werden bis zu einem gewissen Grad durch eine Abstellanlage für ein Kraftfahrzeug überwunden, die mindestens ein Trägerteil, mindestens einen Halter und mindestens einen Tisch umfasst.

Jeder Halter umfasst einen Boden für eine Aufnahme, ein Bein zum Stützen des Tisches und eine Trennwand. Der Boden ist auf der einen Seite mit einem Bein und auf der anderen Seite mit einer Trennwand versehen. Die Trennwand umfasst mindestens ein Führungselement des Halters. Das Bein hat zwei Enden. Das erste Ende des Beins umfasst eine Halterung am Bein. Mit dem anderen Ende des Beins ist das Bein fest mit dem Boden verbunden.

Jeder Tisch umfasst eine Tischplatte und eine Halterung am Tisch. Die Halterung am Tisch ist fest mit der Unterseite der Tischplatte verbunden. Die Halterung am Bein und die Halterung am Tisch sind untereinander komplementär und abnehmbar verbunden.

Jedes Trägerteil umfasst eine Aufnahme. Die Aufnahme umfasst mindestens ein Führungselement der Aufnahme. Das Führungselement des Halters und das Führungselement der Aufnahme sind vorzugsweise lineare Führungselemente. Das Führungselement des Halters und das Führungselement der Aufnahme sind untereinander komplementär und verschiebbar miteinander verbindbar. Die Anzahl der Führungselemente des Halters kann gleich oder geringer sein als die Anzahl der Führungselemente der Aufnahme. Die Abstellanlage kann ein Trägerteil, zwei Trägerteile oder mehr als zwei Trägerteile umfassen.

In der von den Führungselementen definierten Bewegungsrichtung gesehen, ragt jedes Führungselement des Halters in mindestens einer Richtung über den Boden des Halters hinaus, wobei die Führungselemente des Halters Vorsprünge sein können. In der gleichen Ansicht sind die Abmessungen der Aufnahme gleich oder größer als die Abmessungen des Beins. Die Richtung dieser Ansicht ist vorzugsweise von oben nach unten gerichtet. Die Tiefe der Aufnahme ist vorzugsweise gleich oder größer als die Höhe des gesamten Halters, d. h. als die Höhe des Beins, die Dicke des Bodens und die Höhe der Trennwand zusammen. Allenfalls kann ein Raum für das Bein unter der Aufnahme vorgesehen werden, wobei dieser Raum unter dem Niveau des Bodens für die Aufnahme liegt.

Die Trennwand kann die Form eines I-Profils haben. Die Seitenwände des I-Profils können bogenförmig gebogen werden. Eine Grundfläche oder beide Grundflächen des I-Profils können die Abmessungen des Bodens überschreiten. Diese sich überschreitenden Teile der Trennwand können Vorsprünge sein, die Führungselemente des Halters sein können. Das Führungselement des Halters kann auch einen Vorsprung umfassen, der an der Grundfläche der Trennwand befestigt ist. Die Vorsprünge können zum Beispiel die Form eines Quaders oder eines Halbzylinders haben.

Das Bein des Halters kann vorteilhaft hohl sein, um den gesamten Halter leichter zu machen. Die Form des Endes des Beins, das am Boden befestigt ist, kann in Form und Abmessungen mit der Form und den Abmessungen des Bodens identisch sein. Die Form und die Abmessungen des Beins können sich über seine Länge allmählich ändern, so dass das Ende des Beins, das die Halterung am Bein umfasst, eine unterschiedliche Form sowie unterschiedliche Abmessungen als die Form und die Abmessungen des Bodens haben kann.

Die Halterung am Bein kann die gleiche oder eine unterschiedliche Form haben als das Ende des Beins, an dem sie befestigt ist. Bei unterschiedlichen Formen der Halterung am Bein und des Endes des Beins kann die Halterung am Bein in der Mitte des Endes des Beins angebracht werden, wobei die Fläche des Endes des Beins, die nicht von der Halterung am Bein besetzt wird, eine Auflagefläche für die Tischplatte bieten kann, um die Stabilität des am Bein befestigten Tisches zu erhöhen. Die Halterung am Bein kann zum Beispiel die Form eines Zylinders oder eines Kegelstumpfs haben.

Der Tisch kann am Umfang seiner Oberseite der Platte einen Rand aufweisen, der zum Beispiel verhindert, dass ein auf dem Tisch abgestellter Gegenstand herunterfällt. Die Tischplatte kann auch mindestens eine flache Vertiefung zur Ablage von Gegenständen umfassen. Die Tischplatte kann vorzugsweise eine quadratische Form mit einer annähernd konstanten Höhe/Dicke und einer Seitenlänge von einigen zehn Zentimetern haben. Die Höhe der Platte kann zwischen einem und mehreren zehn Millimetern variieren. Die Halterung am Tisch kann vorzugsweise in der Mitte der Unterseite des Tisches positioniert werden, um die Stabilität des Tisches zu erhöhen. Die Halterung am Tisch kann zum Beispiel durch eine Aussparung in der Tischplatte oder durch ein erhöhtes Profil mit einer inneren Einsenkung gebildet werden. Die innere Einsenkung oder Aussparung in der Tischplatte kann eine Form haben, die zur Form der Halterung am Bein komplementär ist. Die Halterung am Bein und die Halterung am Tisch können lösbar verbunden werden, zum Beispiel durch eine Bajonettverbindung oder eine einfache Steckverbindung. Der Tisch kann ein oder zwei Scharniere umfassen. Jedes Scharnier kann die Tischplatte, auf der es sich befindet, in zwei Teile teilen. Wenn zwei Scharniere verwendet werden, sind die beiden Scharniere parallel ausgerichtet und teilen die Tischplatte in insgesamt drei Teile. Die Scharniere können es ermöglichen, die einzelnen Teile der Platte zusammenzuklappen. Die Verwendung von Scharnieren kann von Vorteil sein, um die Tischplatte während der Verstauung zu reduzieren. Die einzelnen Scharniere können mit einem Verriegelungsmechanismus ausgestattet sein, der sie in einer ausgeklappten Position hält. Ein Beispiel für einen Verriegelungsmechanismus kann eine verschiebbare Raste sein, die aus zwei Teilen besteht, wobei jedes Teil von der Unterseite her an einem Teil der Tischplatte befestigt ist. Der erste Teil kann zum Beispiel eine Metallöse sein, und der zweite Teil kann zum Beispiel ein verschiebbares Plättchen sein, das eine komplementäre Form gegenüber der Metallöse aufweist.

Das Trägerteil kann jedes Teil sein, das eine Aufnahme umfasst. Vorteilhafterweise kann das Trägerteil ein Teil des Fahrzeugs sein, zu dem mehr als ein Mitglied der Besatzung bequemen Zugang hat, zum Beispiel kann es sich um eine Mittelkonsole handeln, zu der Fahrer und Beifahrer einen bequemen Zugang haben. Jedes Trägerteil kann eine horizontale Oberseite aufweisen, in der sich eine Aufnahme befindet.

Die Aufnahme kann von der einen Seite ein offener Hohlraum sein, der von Seitenwänden und einem unteren Boden begrenzt sein kann. Der Eintritt zur Aufnahme kann von den Oberkanten der Aufnahme begrenzt werden, die an der Berührungsstelle zwischen der Oberseite des Trägerteils und den die Aufnahme begrenzenden Seitenwänden gebildet werden. Die Aufnahme kann mehrere zehn Zentimeter tief sein. Der Eintritt zur Aufnahme kann eine beliebige Form haben, vorzugsweise jedoch eine Form mit abgerundeten Ecken, wie zum Beispiel ein Oval, eine Ellipse, ein Kreis oder ein Quadrat mit abgerundeten Ecken. Die Abmessungen der Aufnahme können vom Eintritt in die Aufnahme nach unten in die Aufnahme abnehmen, und es kann von Vorteil sein, wenn die Aufnahme die Form des Eintritts in die Aufnahme über ihre gesamte Tiefe beibehält. Zum Beispiel bei einer kreisförmigen Form des Eintritts in die Aufnahme kann die Aufnahme die Form eines Kegelstumpfs haben.

Mindestens eine Abmessung des Bodens für die Aufnahme in horizontaler Richtung kann gleich oder kleiner als die Länge des I-Profils der Trennwand sein. Die Form des Bodens kann mit der Form des Eintritts in die Aufnahme identisch sein, wobei die Abmessungen des Bodens gleich oder kleiner als die Abmessungen des Eintritts in die Aufnahme sind. Der Boden für die Aufnahme kann mehrere Einheiten bis zu mehreren zehn Millimetern dick sein.

Das Führungselement des Halters und das Führungselement der Aufnahme können vertikal ausgerichtet werden. Das Führungselement der Aufnahme kann zum Beispiel eine Nut sein. Die Gleitverbindung zwischen dem Führungselement des Halters und dem Führungselement der Aufnahme kann linear sein. Die Nut des Führungselements der Aufnahme kann am oberen Ende offen sein, um den Vorsprung des Führungselements des Halters bequem einführen zu können. Das untere Ende der Nut kann mit einem Gummifuß versehen sein, der als Anschlag für die Bewegung des Vorsprungs in dieser Nut dienen kann.

Die Abstellanlage für ein Kraftfahrzeug kann in zwei Konfigurationen angeordnet werden. Bei der einen Konfiguration handelt es sich um einen Tisch und bei der anderen Konfiguration um einen Getränkehalter. Die einzelnen Teile der Abstellanlage können leicht von einer Konfiguration in eine andere umgestellt werden und umgekehrt.

In der Tischkonfiguration kann der Halter nur teilweise in die Aufnahme eingeführt werden, nämlich nur durch die Trennwand. Das Führungselement des Halters, also der Vorsprung, zusammen mit dem Führungselement der Aufnahme, also der Nut, werden in dieser Konfiguration ineinander gesteckt. Der Vorsprung kann bis zum Gummifuß, der sich am unteren Ende der Nut befindet, in die Nut eingeführt werden. Der Gummifuß kann somit als Anschlag für die Verbindung zwischen dem Halter und der Aufnahme dienen. Der Rest des Halters, also der Boden und das Bein, sind nach oben über die Aufnahme ausgerichtet. An der Halterung am Bein kann die Halterung am Tisch abnehmbar befestigt werden, wodurch der Tisch mit dem Bein verbunden wird. Ein Teil der Unterseite der Platte um die Halterung am Tisch kann gegen einen Teil des Beinendes abgestützt werden, der über die Abmessungen der Halterung am Bein hinausgeht, wodurch die Stabilität des Tisches erhöht wird. Die Höhe der Tischposition wird durch die Höhe des Beins und die Dicke des Bodens bestimmt, die über die Aufnahme hinausragen. Die Tischplatte kann sich bis zu einigen zehn Zentimetern über dem Eintritt in die Aufnahme befinden.

Bei der Getränkehalterkonfiguration kann der gesamte Halter in die Aufnahme eingesetzt werden. Das Bein des Halters befindet sich innerhalb der Aufnahme, wobei der Boden und die Trennwand sich oberhalb dieses Beins befinden. In dieser Konfiguration kann die Verbindung des Halters mit der Aufnahme mit Hilfe von Führungselementen des Halters, wie zum Beispiel Vorsprünge, erfolgen, die in Führungselemente der Aufnahme, wie zum Beispiel Nuten, eingesetzt werden. Der Gummifuß am unteren Ende der Nuten kann als Anschlag der Verbindung der Führungselemente des Halters mit den Führungselementen der Aufnahme dienen. Bei dieser Konfiguration ragt vorzugsweise kein Teil des Halters über die Oberfläche des Trägerteils hinaus, wobei sich die Oberseite der Trennwand auf Höhe der Oberkante der Aufnahme oder einige Zentimeter unterhalb der Oberkante der Aufnahme befinden kann. Der Tisch, der in der Getränkehalterkonfiguration nicht am Bein des Halters befestigt ist, kann in dem für das Verstauen von Tischen vorgesehenen Raum untergebracht werden.

Ein Vorteil der erfindungsgemäßen Abstellanlage für ein Kraftfahrzeug kann eine einfachere Handhabung beim Wechsel der einzelnen Konfigurationen der Komponenten der Abstellanlage für ein Kraftfahrzeug sein. Ein weiterer Vorteil kann die Einfachheit der Form der einzelnen abnehmbaren Teile und der damit verbundene Platzbedarf sein. Darüber hinaus kann die Leichtbauweise der Abstellanlage vorteilhaft sein, zum Beispiel dank dem Bein des Halters, der hohl sein kann und so die gesamte Konstruktion wesentlich leichter macht. Die Einfachheit der Teile der Abstellanlage kann auch in der Produktion von Vorteil sein, wo große Stückzahlen solcher Teile mit einer einfachen Form in kurzer Zeit hergestellt werden können.

Die Mittelkonsole, die sich zwischen den Vordersitzen des Fahrzeugs befindet, kann der Trägerteil der Abstellanlage für das Fahrzeug sein. Der Schalthebel, der sich normalerweise auf der Mittelkonsole befindet, kann durch eine andere Art der Schaltung ersetzt werden, zum Beispiel durch eine Schaltwippe am Lenkrad. Die Aufnahme in der Mittelkonsole kann zwischen dem Fahrer- und dem Beifahrersitz angeordnet werden.

Die Mittelkonsole des Fahrzeugs kann auch einen Stauraum zur Aufbewahrung eines Tisches umfassen. Dieser Stauraum ist ein Raum für die Aufbewahrung des Tisches, der nicht in der Abstellanlage in der Getränkehalterkonfiguration eingesetzt ist. Der Stauraum kann sich zum Beispiel auf der Oberseite der Mittelkonsole oder an der Seite der Mittelkonsole befinden. Der Stauraum kann einen verschließbaren Deckel umfassen. Der Stauraum kann die Länge und die Tiefe mit den Längen der Kanten der Tischplatte identisch haben, so dass der gesamte Tisch oder sogar mehrere Tische in den Stauraum eingesetzt werden können.

Die Armlehne für die hintere Sitzreihe kann ebenfalls der Trägerteil sein. Die Armlehne kann sich zwischen den Seitensitzen der hinteren Sitzreihe befinden. Die Armlehne kann Teil der umklappbaren Rückenlehne des mittleren Sitzes in der hinteren Sitzreihe sein. Die klappbare Armlehne kann nur in der eingeklappten Stellung, also in einer Stellung, in der die Oberseite der Armlehne horizontal ausgerichtet ist, ein Trägerteil der Abstellanlage sein. Die Armlehne kann statisch sein, sie ersetzt also den mittleren Sitz vollständig. Die Aufnahme kann sich im vorderen Bereich der Armlehne befinden, so dass diese Aufnahme für beide Fahrgäste auf den Seitensitzen der hinteren Sitzreihe zugänglich ist.

Die Aufnahme kann zusammen mit dem Boden und der Trennwand durch zwei runde Aussparungen zum Abstellen von Getränken begrenzt werden. Diese zwei runden Aussparungen können durch eine Abstellanlage in der Getränkehalterkonfiguration definiert werden. Die Schottwand zwischen den beiden runden Aussparungen ist eine Trennwand. Diese beiden runden Aussparungen können konkret die Form eines Zylinders oder eines Kegelstumpfs aufweisen. Die Tiefe dieser runden Aussparungen für das Abstellen von Getränken kann gleich oder größer sein als die Höhe der Trennwand des Halters. Es kann von Vorteil sein, wenn die Seitenwände der Trennwand, die die zwei kreisförmigen Aussparungen begrenzen, bogenförmig gebogen sind.

Das Führungselement der Aufnahme, also die Nut, kann zum Beispiel ein Quaderprofil oder ein Halbzylinderprofil haben. Diese Nut kann sich in der Seitenwand befinden, die die Aufnahme begrenzt. Die Nut beginnt vorzugsweise an der Oberkante der Aufnahme. Wenn mehr als eine Nut verwendet wird, sind die einzelnen Nuten vorzugsweise an gegenüberliegenden Wänden der Aufnahme angeordnet. Die Führungselemente des Halters werden entsprechend der Position der Nuten in der Aufnahme am Halter so angeordnet, dass sie mit den Vorsprüngen in die Nuten eingeführt werden können. Das Führungselement des Halters, also der Vorsprung, weist vorzugsweise eine komplementäre Form zum Profil der Nut auf. Der Vorsprung hat zum Beispiel die gleiche Form und die gleichen Abmessungen wie das Profil der Nut, das die Form eines Quaders hat. Die Höhe der Führungselemente der Aufnahme und der Führungselemente des Halters kann mit der Höhe der Trennwand des Halters übereinstimmen.

Die Halterung am Bein kann einen Vorsprung aufweisen, und die Halterung am Tisch kann eine Aussparung aufweisen, die zu dem Vorsprung an der Halterung am Bein komplementär ist. Beide Halterungen können mit einer Bajonettverbindung ergänzt werden, um den Vorsprung und die Aussparung zu sichern.

Die Bajonettverbindung kann zwei gleich geformte Teile umfassen. Jedes Stück der Bajonettverbindung kann mindestens einen Zahn und mindestens eine Nut umfassen. Die beiden Teile der Bajonettverbindung werden zunächst so aneinander angelegt, dass der Zahn des einen Teils in die Nut des Gegenstücks passt. Durch Drehen fährt der Zahn ans Ende der Nut, wobei die Bajonettverbindung die Verbindung der beiden Halterungen sichert. Die Verwendung einer Bajonettverbindung kann vorteilhaft sein, da sie leicht zu handhaben ist, wobei die so entstandene Verbindung sehr stabil und fest ist.

Die Bajonettverbindung kann auch durch ein System aus mindestens zwei Zähnen und aus zu ihnen mindestens zwei komplementären Nuten realisiert werden. Das System von Zähnen kann sich an einer Halterung der Abstellanlage befinden und das System von Nuten kann sich an einer anderen Halterung der Abstellanlage befinden. Eine solche Bajonettverbindung kann durch ein einfaches Einstecken der Zähne in einer Richtung in die jeweiligen Nuten verbunden werden.

Die Aufnahme kann die Form eines Kegelstumpfs mit ovalen Grundflächen haben. Die imaginäre Grundfläche des Eintritts in die Aufnahme hat größere Abmessungen als die untere Basis, die die Aufnahme begrenzt.

Die Tischplatte kann verschiedene zusätzliche Benutzerelemente enthalten, mit denen die Ablagefunktion des Tisches um weitere Funktionen erweitert werden kann, zum Beispiel eine feste Halterung für einen eingelegten Gegenstand. Ein Beispiel für ein Benutzerelement kann ein Halter für einen Tablet-PC sein, der vier verstellbare Füße umfasst, die in einer bogenförmigen Aussparung enden, um die Ecken des Tablet-PCs zu halten. Dieser Halter für den Tablet-PC kann die gesamte obere Tischplatte einnehmen. Ein weiteres Beispiel für ein Benutzerelement kann eine erhöhte Wand um den Umfang der Oberseite der Tischplatte sein, die mehrere Zentimeter hoch sein kann. Diese erhöhte Wand kann zusammen mit der Tischplatte eine Schale bilden, in der zum Beispiel runde Gegenstände aufbewahrt werden können, die ohne die erhöhten Wände von der Tischplatte zu fallen drohen würden.

### Erklärung von Zeichnungen

Das Wesen der Erfindung wird weiterhin anhand von Ausführungsbeispielen erklärt, die mit Hilfe von beigefügten Zeichnungen beschrieben werden, die zeigen:
Fig. 1 eine schematische Darstellung eines Teils der Mittelkonsole mit einem Halter in einer Getränkehalterkonfiguration,
Fig. 2 eine schematische Darstellung eines Teils der Mittelkonsole mit einem Halter in einer Tischkonfiguration, der mit dem Bein nach oben gerichtet ist,
Fig. 3 eine schematische Darstellung eines Details eines Halters der Abstellanlage für ein Kraftfahrzeug bei Ansicht auf die Trennwand und den Boden,
Fig. 4 eine schematische Darstellung eines Details eines Halters bei Ansicht auf die Halterung am Bein,
Fig. 5 eine schematische Darstellung eines Teils der Mittelkonsole mit einem Halter und einem Tisch in einer Tischkonfiguration,
Fig. 6 eine schematische Darstellung eines Seitenschnitts der Abstellanlage für ein Kraftfahrzeug in einer Getränkehalterkonfiguration,
Fig. 7 eine schematische Darstellung eines Seitenschnitts der Abstellanlage für ein Kraftfahrzeug in einer Tischkonfiguration.

### Ausführungsbeispiele der Erfindung

Die Erfindung wird anhand von Ausführungsbeispielen unter Bezugnahme auf die entsprechenden Zeichnungen näher erläutert.

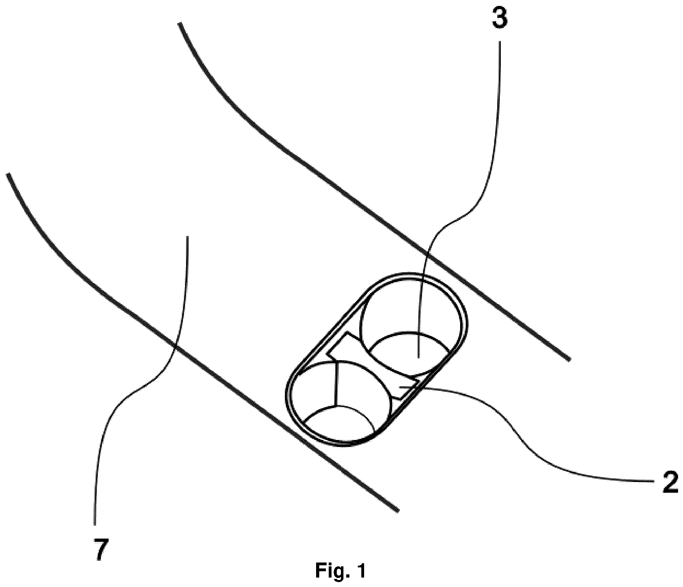

Eine erste beispielhafte Ausführung einer erfindungsgemäßen Abstellanlage für ein Kraftfahrzeug ist in den Fig. 1 bis 7 dargestellt. Die Abstellanlage in dieser beispielhaften Ausführung umfasst ein Trägerteil. In dieser ersten Ausführung ist nur die Mittelkonsole 7 das Trägerteil. Der Schalthebel, der sich sonst auf dieser Mittelkonsole 7 befunden hätte, wurde durch eine Schaltwippe am Lenkrad ersetzt. Die horizontale Fläche der Mittelkonsole 7 wird durch das Vorhandensein einer Aufnahme 8 unterbrochen. Die Aufnahme 8 wird durch die Seitenwände und die untere Basis begrenzt. Die Aufnahme 8 hat die Form eines Kegelstumpfs mit ovalen Grundflächen. Ovale Grundflächen der Aufnahme 8 haben die Form eines Rechtecks mit abgerundeten Windungen an beiden Enden. Die Aufnahme 8 ist 30 cm tief, wobei sich deren Abmessungen vom Eintritt in die Aufnahme 8 nach unten verringern. Die Aufnahme 8 umfasst zwei Führungselemente 12 der Aufnahme, wobei diese Führungselemente 12 der Aufnahme Nuten sind. Diese Nuten befinden sich in der Mitte der gegenüberliegenden parallelen Wände der Aufnahme 8. Beide Nuten sind 10 cm lang und beginnen an den Oberkanten der parallelen Seiten der Aufnahme 8 und sind senkrecht nach unten in die Aufnahme 8 gerichtet. Ein Bestandteil der Mittelkonsole 7 ist auch ein Stauraum 9 zur Aufbewahrung eines Tisches. Der Stauraum 9 befindet sich auf der Oberfläche der Mittelkonsole 7. Der Stauraum 9 grenzt eine quaderförmige Öffnung ab, wobei dieser Quader auf der Oberseite vollständig offen ist. Die Abmessungen des Innenraums des Stauraums 9 sind identisch mit den Abmessungen des Tisches, der Stauraum 9 grenzt also einen quaderförmigen Raum von 30 cm x 30 cm x 3 cm ab.

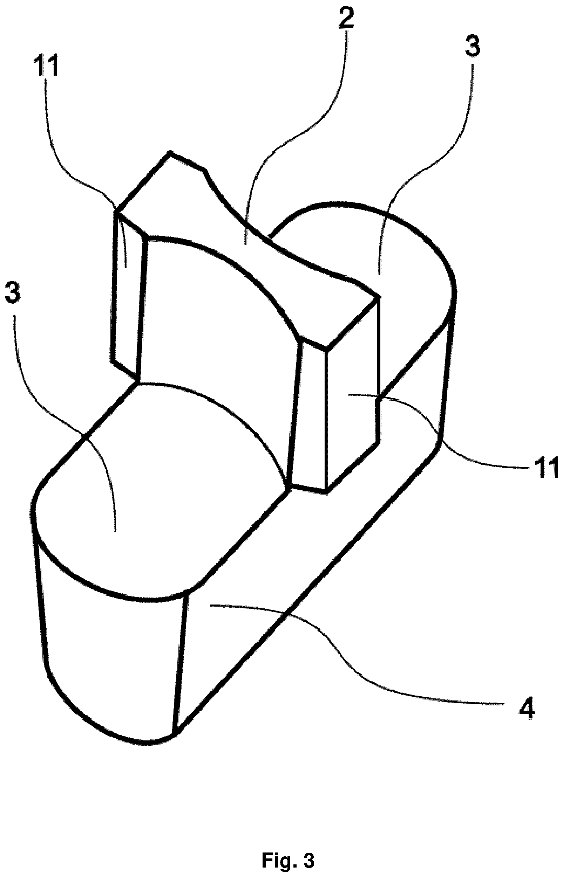

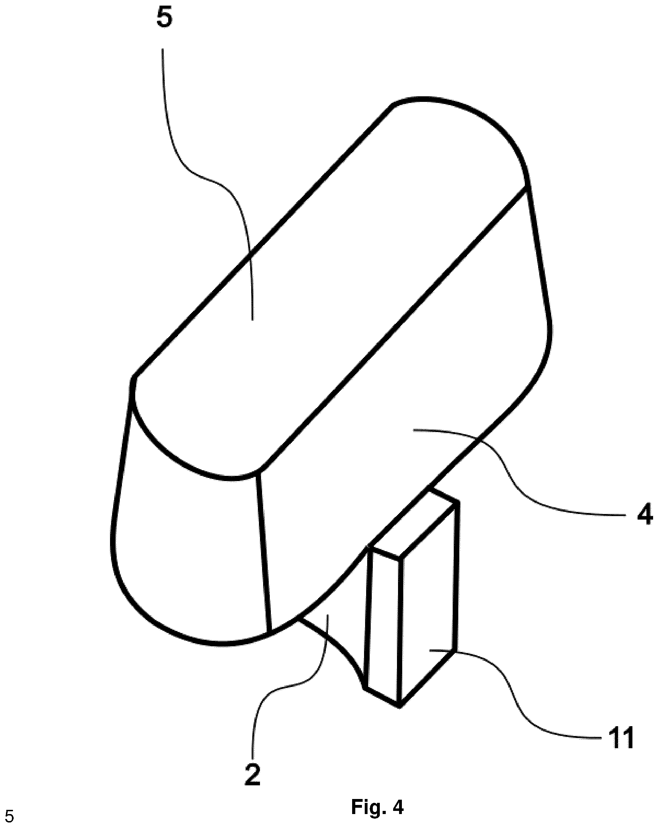

Die Abstellanlage für ein Kraftfahrzeug umfasst auch einen Halter und einen Tisch. Der Halter umfasst einen Boden 3, eine Trennwand 2 und ein Bein 4, wobei das Bein 4 fest mit dem Boden verbunden ist, 3 und die Trennwand 2 ist ebenfalls fest mit dem Boden 3 verbunden, wie in der Fig. 3 und in der Fig. 4 dargestellt ist. Die Höhe des gesamten Halters ist identisch mit der Tiefe der Aufnahme 8 in der Mittelkonsole 7, der Halter ist also 30 cm hoch. Die Höhe des Beins 4 erreicht zusammen mit der Dicke des Bodens 3 eine Höhe von 20 cm und die Trennwand 2 ist 10 cm hoch. Das Bein 4 zusammen mit dem Boden 3 haben die Form eines Kegelstumpfs, dessen beide Basen eine ovale Form haben, konkret haben sie die Form eines Rechtecks mit abgerundeten Ecken an beiden Enden. Eine allmähliche Verringerung der Abmessungen des Beins 4 und des Bodens 3 ist identisch mit der allmählichen Verringerung der Abmessungen der Aufnahme 8. Die Trennwand 2 ist relativ zum Boden 3 senkrecht zur Hauptsymmetrieachse des Ovals gerichtet. Die Trennwand 2 hat die Form eines I-Profils, wobei die beiden Grundflächen dieses Profils über die Kante des Bodens 3 des Halters hinausragen. Diese hinausragenden Teile der Trennwand 2 sind die Führungselemente 11 des Halters, die mit ihrer Form die Form der Nut in der Aufnahme 8 genau verfolgen. In der Draufsicht auf den Halter liegen die Führungselemente 11 des Halters auf der Nebenachse des Ovals des Bodens 3 des Halters. Dank der Führungselemente 11 des Halters kann der Halter in die Aufnahme 8 eingeführt werden und stabil auf dem Trägerteil befestigt werden. Das freie Ende des Beins 4 geht zur Halterung 5 am Bein über. Die Halterung 5 am Bein weist die gleiche Form wie das freie Ende des Beins 4 auf, an dem diese Halterung 5 am Bein befestigt ist, also eine rechteckige Form mit abgerundeten Ecken an beiden Enden.

Der Tisch enthält eine Platte 6 und eine Halterung 10 am Tisch. Die Platte 6 hat eine quadratische Form mit einer Kantenlänge von 30 cm. Die Platte 6 des Tisches ist 3 cm hoch. Die Halterung 10 am Tisch ist fest mit der Unterseite der Platte 6 verbunden. Die Halterung 10 am Tisch an der Unterseite der Platte 6 des Tisches umfasst ein erhabenes Profil, in dessen Mitte sich eine Aussparung befindet. Die Aussparung in der Mitte des erhabenen Profils hat eine zur Form der Halterung 5 am Bein komplementäre Form. Der Tisch ist daher abnehmbar an eine Halterung 5 am Bein durch einfaches senkrechtes Schieben aufsteckbar.

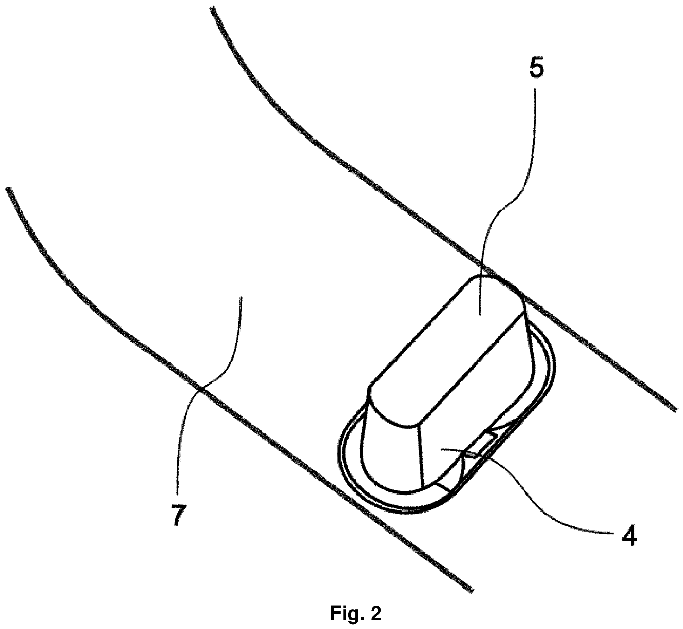

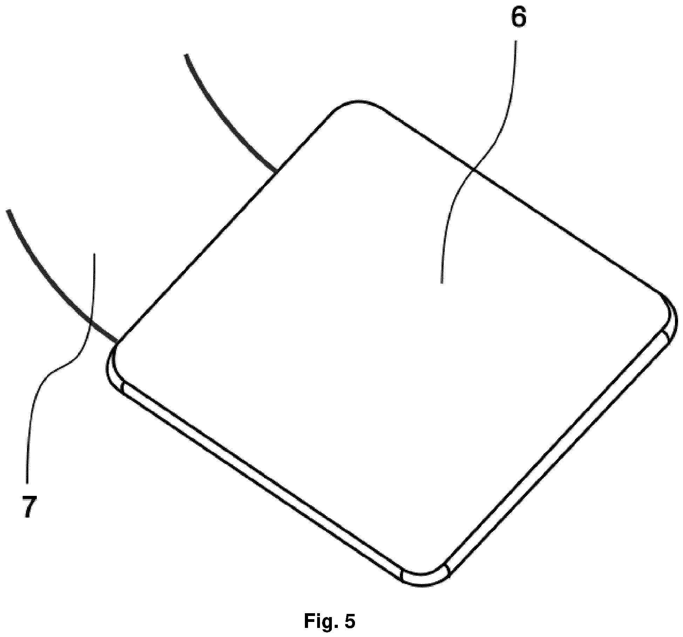

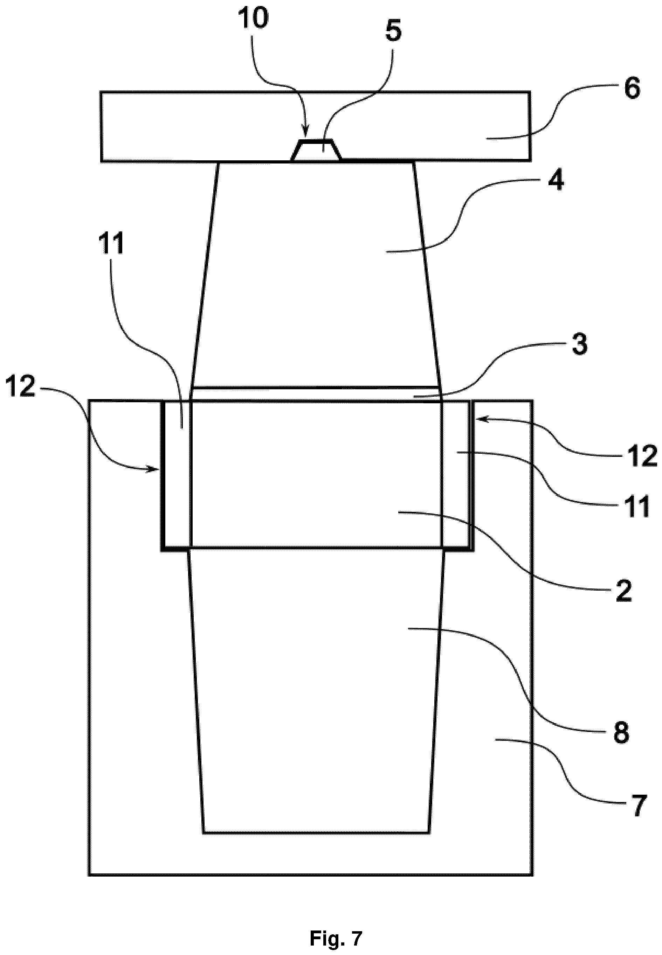

In der Tischkonfiguration wird die Trennwand 2 in die Aufnahme 8 in der Mittelkonsole 7 eingeschoben, wobei sie durch präzises Einschieben der vorstehenden Teile der Trennwand 2 der Halterung in die Nuten der Aufnahme 8 an Ort und Stelle gehalten wird. Das Bein 4 zusammen mit dem Boden 3 werden aus der Aufnahme 8 heraus und weiter oberhalb der Aufnahme 8 gerichtet, wie in Abbildung 2 dargestellt ist. An die Halterung 5 am Bein wird ein Tisch mittels dessen Halterung 10 am Tisch auf der Unterseite der Platte 6 befestigt. Die Halterung 10 am Tisch ist auf die Halterung 5 am Bein einfach senkrecht aufgesetzt. Die Abstellanlage für ein Kraftfahrzeug, die in die Tischkonfiguration zusammengesetzt ist, wird in der Fig. 2 und in der Fig. 5 dargestellt. Die Einstellbarkeit des Systems ist auch in der Fig. 7 schematisch dargestellt.

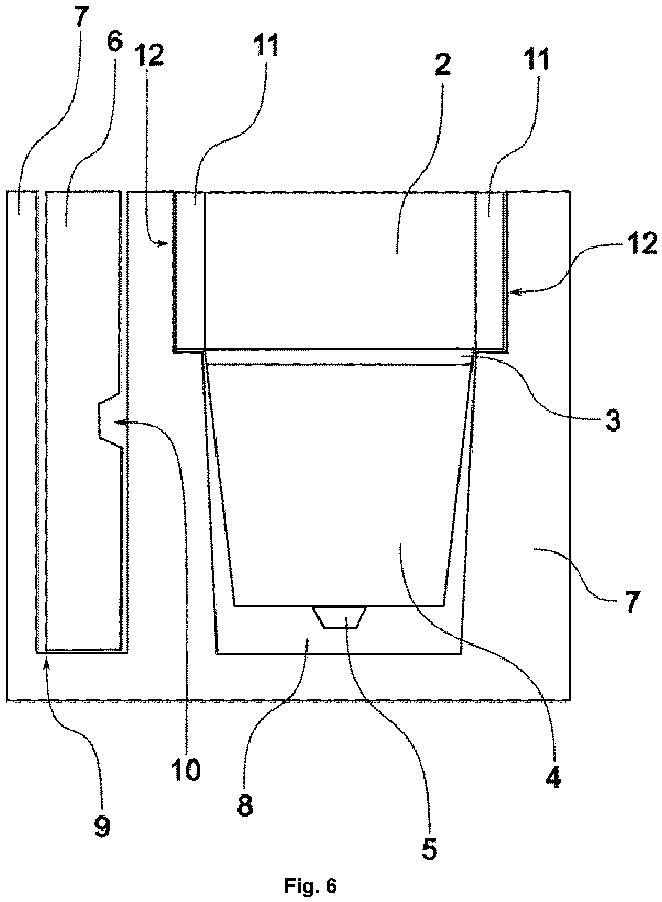

Die Abstellanlage für ein Kraftfahrzeug gemäß der ersten beispielhaften Ausführung ist in eine Getränkehalterkonfiguration einstellbar, wie in der Fig. 1 und in der Fig. 6 dargestellt ist. In der Getränkehalterkonfiguration wird der gesamte Halter in die Aufnahme 8 eingeschoben. Das Bein 4 des Halters befindet sich unter dem Boden 3 und der Trennwand 2. Die Aufnahme 8 zusammen mit dem Boden 3 und der Trennwand 2 grenzen zwei runde Aussparungen für das Abstellen von Getränken ab. Die beiden runden Aussparungen weisen die Form eines Zylinders auf, wobei sie 10 cm tief sind. Die Oberseite der Trennwand 2 befindet sich auf der gleichen Höhe wie die Oberseite der Mittelkonsole 7. Der Tisch wird in den Stauraum 9 in der Mittelkonsole 7 eingeschoben.

Eine zweite beispielhafte Ausführung einer Abstellanlage für ein Kraftfahrzeug ist in der Fig. 6 und in der Fig. 7 dargestellt. Die Abstellanlage umfasst zwei Trägerteile, zwei Halter und zwei Tische. Die Trägerteile in dieser zweiten beispielhaften Ausführung sind die Mittelkonsole 7 und die Armlehne für die hintere Sitzreihe. Der Schalthebel, der sich in der Regel in der Mittelkonsole 7 befindet, wird in diesem Ausführungsbeispiel durch eine Schaltwippe im Bereich des Lenkrads ersetzt. Die Mittelkonsole 7 sowie die Armlehne umfassen je eine Aufnahme 8, die 24 cm tief ist. Beide Aufnahmen 8 werden von den Seitenwänden und der unteren Basis begrenzt. Der Eintritt in die Aufnahme 8 befindet sich auf der Oberfläche des Trägerteils und wird von den Kanten begrenzt, die durch die Verbindung der horizontalen Oberfläche des Trägerteils mit den die Aufnahme 8 begrenzenden Seitenwänden gebildet werden. Die Hohlräume der beiden Aufnahmen 8 weisen die Form eines Kegelstumpfs mit ovalen Grundflächen auf. Die ovalen Grundflächen sind in dieser beispielhaften Ausführung elliptisch. Jede Aufnahme 8 umfasst zwei Führungselemente 12 der Aufnahme, die in dieser beispielhaften Ausführung quaderförmige Nuten sind. Die Nuten liegen auf der Nebenachse der Ellipse des Eintritts zur Aufnahme 8. Jede Nut ist 8 cm lang, wobei sie an der Kante der Aufnahme 8 beginnt und senkrecht nach unten gerichtet wird. Jede Nut ist 1 cm tief und 1 cm breit. Die Mittelkonsole 7 umfasst ferner einen Stauraum 9 zum Aufbewahren des Tisches. Dieser Stauraum 9 befindet sich neben der Aufnahme 8. Der Stauraum 9 ist 25 cm lang, 25 cm tief und 10 cm breit.

Bei diesem Ausführungsbeispiel sind beide Halter in Form und Abmessungen identisch. Jeder Halter umfasst eine Trennwand 2, ein Bein 4 zum Stützen des Tisches und einen Boden 3 für die Aufnahme 8, an dem die Trennwand 2 auf einer Seite fest angebracht ist und an der auf der anderen Seite ein Bein 4 befestigt ist. Der Halter ist insgesamt 24 cm hoch. Die Trennwand 2 weist die Form eines I-Profils auf, dessen Seitenwände bogenförmig gekrümmt sind. Führungselemente 11 sind mit beiden Grundflächen des I-Profils verbunden, bei denen es sich in diesem Ausführungsbeispiel um Führungsquader mit quadratischer Grundfläche, 8 cm hoch und mit einer Kante der Grundfläche von 1 cm handelt. In der Draufsicht ragen die Führungsquader über die Form des Bodens 3 und des Beins 4 in ihrer Länge und Breite hinaus. Die Führungsquader und Nuten in der Aufnahme 8 haben eine komplementäre Form und bilden zusammen eine lineare Gleitverbindung. Das Bein 4 zusammen mit dem Boden 3 haben die Form eines Kegelstumpfs mit elliptischen Grundflächen. Das Bein 4 ist an einem Ende fest mit dem Boden 3 verbunden, wobei das andere Ende in die Halterung 5 am Bein übergeht. Die Halterung 5 am Bein weist die Form eines Kegelstumpfs auf, wobei sich zwei Zähne und zwei Nuten am Umfang dieses Kegelstumpfs zur Befestigung der Halterung 10 am Tisch befinden, wobei die zwei Zähne und die zwei Nuten Teil einer Bajonettverbindung sind. Diese Nuten auf dem Umfang der Halterung 5 am Bein haben die Eigenschaft eines Gewindes und jede Nut erstreckt sich über ein Drittel des Umfangs der Halterung 5 am Bein.

Der Tisch umfasst eine Platte 6 und eine Halterung 10 am Tisch. Die Halterung 10 am Tisch ist fest mit der Unterseite der Platte 6 des Tisches verbunden. Die Platte 6 hat eine quadratische Form mit einer Kantenlänge von 25 cm. Um den Umfang der Oberseite der Platte 6 herum befindet sich ein Rand. Der Rand ist 5 mm hoch. Die Halterung 10 am Tisch weist eine zur Form der Halterung 5 am Bein komplementäre Form auf. Die Halterung 10 am Tisch umfasst also eine Aussparung, die durch zwei Zähne und zwei Nuten ergänzt wird, wobei diese Nuten die Eigenschaft eines Gewindes haben und sich über ein Drittel des Umfangs der Halterung 10 am Tisch erstrecken. Die Aussparung weist die Form eines Kegelstumpfs auf. Die Vorsprünge an der Halterung 10 am Tisch haben eine komplementäre Form zu den Nuten am Umfang der Halterung 5 am Bein und die Nuten an der Halterung 10 am Tisch haben eine komplementäre Form zur Form der Zähne der Halterung 5 am Bein auf.

Die einzelnen Teile der Abstellanlage, die in die Getränkehalterkonfiguration zusammengebaut sind, sind in der Fig. 6 dargestellt. In der Getränkehalterkonfiguration wird der gesamte Halter in die Aufnahme 8 eingeschoben. Ein stabiles Einsetzen des Halters in die Aufnahme 8 wird durch die Verbindung der Führungselemente 11 des Halters mit den Führungselementen 12 der Aufnahme erreicht. Das Bein 4 des Halters befindet sich unter dem Boden 3, der sich unter der Trennwand 2 befindet. Die Aufnahme 8 zusammen mit dem Boden 3 und der Trennwand 2 grenzen zwei kreisförmige Aussparungen für das Abstellen von Getränken ab. Beide kreisförmigen Aussparungen sind 8 cm tief. Die Oberfläche der Trennwand 2 befindet sich auf der gleichen Höhe wie die Oberkante der Aufnahme 8. Der Tisch, der in dieser Konfiguration nicht mit dem Bein 4 des Halters verbunden ist, wird in den Stauraum 9 in der Mittelkonsole 7 eingeschoben.

Die einzelnen Teile der Abstellanlage in der Tischkonfiguration sind in der Fig. 7 dargestellt. In der Tischkonfiguration wird der Halter in die Aufnahme 8 mit nur seinem Teil eingesetzt, nämlich nur mit der Trennwand 2. Ein stabiles Einsetzen der Trennwand 2 in die Aufnahme 8 wird durch Einschieben der Führungselemente 11 des Halters erreicht, also der Führungsquader, in die Führungselemente 12 der Aufnahme, also in die Nuten. Die gesamte Trennwand 2 befindet sich innerhalb der Aufnahme 8 und der Boden 3 und das Bein 4 werden nach oben über die Aufnahme 8 gerichtet. Der Tisch ist mit dem Bein 4 mittels einer Halterung 10 am Tisch verbunden, der mit der Halterung 5 am Bein verbunden ist. Die Verbindung von Tisch und Bein 4 wird durch die Vorsprünge der Halterung 10 am Tisch realisiert, die in die Nuten der Halterung 5 am Bein eingreifen und durch Drehen des gesamten Tisches um eine Drittelumdrehung wird eine feste Verbindung des Beins 4 mit dem Tisch erreicht. Die Platte 6 des Tisches befindet sich 16 cm über dem Eintritt in die Aufnahme 8, wobei diese Höhe der Höhe des Beins 4 zusammen mit der Dicke des Bodens 3 gleich ist.

Die Anordnung der Abstellanlage in die einzelnen Konfigurationen ist in der Armlehne und der Mittelkonsole 7 voneinander unabhängig. Die Abstellanlage in der Armlehne ist unabhängig von der Konfiguration der Abstellanlage in der Mittelkonsole 7 in eine andere Konfiguration verstellbar. Dies gilt auch für die Abstellanlage in der Mittelkonsole 7.

### Alternative Ausführungen:

Im Folgenden werden alternative Ausführungen der erfindungsgemäßen Abstellanlage für ein Kraftfahrzeug beschrieben. Sofern bei den einzelnen alternativen Beispielen nicht anders angegeben, sind die anderen Merkmale der Erfindung mit der ersten beispielhaften Ausführung oder der zweiten beispielhaften Ausführung identisch.

Der Halter mit Tisch kann in jeder Aufnahme 8 anders angeordnet sein, also in der Aufnahme 8 in der Mittelkonsole 7 kann er in der Getränkehalterkonfiguration und in der Aufnahme 8 in der Armlehne für die hintere Sitzreihe kann er in der Tischkonfiguration ausgeführt sein oder umgekehrt.

Die Abstellanlage kann nur ein Trägerteil umfassen, das nur die Armlehne für die hintere Sitzreihe sein kann. Diese Armlehne umfasst eine Aufnahme 8.

Der Eintritt in die Aufnahme 8 kann kreisförmig sein, wobei sich die Form der Aufnahme 8 in Richtung vom Eintritt in die Aufnahme 8 nach unten verringern kann.

Die Aufnahme 8 kann die Abmessungen und die Form des Eintritts in die Aufnahme 8 über ihre gesamte Tiefe beibehalten, die Aufnahme 8 wird also eine regelmäßige Form haben.

Der Halter kann ein Führungselement 11 des Halters umfassen, also einen Vorsprung, und die Aufnahme 8 kann zwei Führungselemente 12 der Aufnahme umfassen, also zwei Nuten, die komplementär zur Form des Vorsprungs geformt sind.

Das Bein 4 des Halters kann eine andere Form haben als die Form der Aufnahme 8_{.} Das Bein 4 kann zylindrisch geformt sein, wobei der Eintritt in die Aufnahme 8 und eine die Aufnahme 8 begrenzende Basis eine elliptische Form haben kann, wobei die Abmessungen der Aufnahme 8 über die gesamte Tiefe konstant sein können.

Die Halterung 5 am Bein kann einen Teil des Gewindes und die Halterung 10 am Tisch kann einen zweiten Teil des Gewindes umfassen. Beide Teile des Gewindes sind komplementär. In diesem Fall kann der Tisch am Bein 4 aufgeschraubt werden.

Die Halterung 5 am Bein und die Halterung 10 am Tisch können eine Magnetkupplung umfassen. Diese Magnetkupplung kann ein versehentliches Ausfallen eines aufgesetzten Tisches aus dem Bein 4 verhindern. Bei Verwendung einer Magnetkupplung kann es von Vorteil sein, dass die Halterung 5 am Bein eine zur Form der Halterung 10 am Tisch komplementäre Form hat, wobei der Tisch nur durch vertikales Aufsetzen auf dem Bein angeschlossen werden kann.

Die Halterung 5 am Bein kann sechs Nuten der aufsetzbaren Bajonettverbindung und die Halterung 10 am Tisch kann sechs Zähne der aufsetzbaren Bajonettverbindung aufweisen. Eine solche Bajonettverbindung lässt sich herstellen, indem man die Halterung 10 am Tisch auf die Halterung 5 am Bein aufsetzt und durch eine gleichmäßige Bewegung in einer geraden Richtung können alle sechs Zähne in ihre jeweiligen Nuten eingesteckt werden und so wird die Bajonettverbindung gesichert. Das Lösen einer solchen Bajonettverbindung kann dann durch Bewegen der Tischplatte 6 in die entgegengesetzte Richtung zu derjenigen, in der die Bajonettverbindung gesichert war, erfolgen, wodurch die einzelnen Zähne der Halterung 10 am Tisch aus den Nuten der Halterung 5 am Bein herausgefahren werden.

Die Tischplatte 6 kann zwei parallele Scharniere umfassen. Diese Scharniere können die Tischplatte 6 in drei Teile teilen, den linken Teil, den rechten Teil und den mittleren Teil. Der mittlere Teil umfasst eine Halterung 10 am Tisch. Der linke und der rechte Teil der Tischplatte 6 sind über die Tischplatte 6 klappbar. Die beiden Scharniere sind so angeordnet, dass beim Ausklappen des rechten und linken Teils der Tischplatte 6 alle drei Teile der Tischplatte 6 eine ebene Fläche auf ihrer Oberfläche bilden. Die Größe des Stauraums 9 zum Abstellen des Tisches kann an die Größe des Tisches mit den zusammengeklappten Teilen der Platte 6 angepasst werden. Beide Scharniere können mit einem Verriegelungsmechanismus ausgestattet sein, wobei dieser Verriegelungsmechanismus eine verschiebbare Raste ist. Diese verschiebbare Raste besteht aus zwei Teilen, wobei der erste Teil eine Metallöse ist, die an einem Teil der Tischplatte befestigt ist, und der zweite Teil ein verschiebbares Plättchen ist, das komplementäre Abmessungen zur Metallöse aufweist. Durch Einsetzen des Plättchens in die Öse werden die beiden Teile der Platte in der ausgeklappten Position verriegelt.

Die Führungselemente 12 der Aufnahme, also die Nuten, können an ihrem unteren Ende einen Gummifuß aufweisen, der als Anschlag für die Führungselemente 11 des Halters, also die Vorsprünge, dient.

Der Stauraum 9 zum Abstellen des Tisches kann sich an einer Seitenwand der Mittelkonsole 7 befinden und kann aufklappbar sein. Im aufgeklappten Zustand kann der Stauraum 9 offen sein und im heruntergeklappten Zustand kann der Stauraum 9 geschlossen sein.

Die Höhe des Halters kann geringer sein als die Tiefe der Aufnahme 8. In einem solchen Fall kann unter dem Bein 4 in der Getränkehalterkonfiguration ein Freiraum vorhanden sein, der durch das Bein 4 an der Oberseite, die untere Basis der Aufnahme 8 an der Unterseite und den Seitenmantel der Aufnahme 8 an den Seiten begrenzt wird. Dieser Raum kann leer sein.

Die Tischplatte 6 kann durch einen Halter für einen Tablet-PC ergänzt werden. Dieser Halter für den Tablet-PC kann mit vier verstellbaren Füßen ausgestattet werden, die mit einer bogenförmigen Halterung für die Ecken des Tablet-PCs versehen sind. Dieser Halter für den Tablet-PC kann die gesamte obere Fläche der Tischplatte einnehmen, wobei er gleichzeitig fest mit der Tischplatte verbunden ist. Die Halterung 10 am Tisch kann durch ein Gelenk ergänzt werden, damit der Tisch in alle Richtungen geneigt werden kann.

### Bezugszeichenliste

2 - Trennwand
3 - Boden
4 - Bein
5 - Halterung am Bein
6 - Platte
7 - Mittelkonsole
8 - Aufnahme
9 - Stauraum
10 - Halterung am Tisch
11 - Führungselement des Halters
12 - Führungselement der Aufnahme

## Patentansprüche

1. Abstellanlage für ein Kraftfahrzeug, die wenigstens ein Trägerteil, wenigstens einen Halter und wenigstens einen Tisch umfasst, **dadurch gekennzeichnet, dass** jeder Halter einen Boden (3) für eine Aufnahme (8), eine Trennwand (2) und ein Bein (4) zum Stützen des Tisches umfasst, wobei an den Boden (3) von einer Seite ein Bein (4) und von einer anderen Seite am Boden (3) eine Trennwand befestigt ist (2), die wenigstens ein Führungselement (11) des Halters umfasst, wobei das Bein ein erstes Ende des Beins (4), das eine Halterung (5) am Bein umfasst, und ein zweites Ende des Beins (4) aufweist, das am Boden (3) befestigt ist, wobei jeder Tisch eine Platte (6) und eine Halterung (10) am Tisch umfasst, die an der Unterseite der Tischplatte (6) befestigt ist, wobei die Halterung (5) am Bein und die Halterung (10) am Tisch untereinander komplementär und abnehmbar verbindbar sind, wobei jedes Trägerteil eine Aufnahme (8) umfasst, die wenigstens ein Führungselement (12) der Aufnahme umfasst, wobei das Führungselement (11) des Halters und das Führungselement (12) der Aufnahme untereinander komplementär und verschiebbar verbindbar sind, wobei bei Ansicht in Richtung der durch die Führungselemente definierten Bewegung jedes Führungselement (11) des Halters in wenigstens einer Richtung das Bein (4) überragt und bei der gleichen Ansicht die Abmessungen der Aufnahme (8) gleich oder größer als die Abmessungen des Beins (4) sind.

2. Abstellanlage für ein Kraftfahrzeug nach Anspruch 1, **dadurch gekennzeichnet, dass** der Trägerteil eine Mittelkonsole (7) ist.

3. Abstellanlage für ein Kraftfahrzeug nach Anspruch 2, **dadurch gekennzeichnet, dass** die Mittelkonsole (7) einen Stauraum (9) zur Aufbewahrung eines Tisches umfasst.

4. Abstellanlage für ein Kraftfahrzeug nach einem der Ansprüche 1 bis 3, **dadurch gekennzeichnet, dass** ein Trägerteil eine klappbare Armlehne für die hintere Sitzreihe ist.

5. Abstellanlage für ein Kraftfahrzeug nach einem der Ansprüche 1 bis 4, **dadurch gekennzeichnet, dass** die Aufnahme (8) zusammen mit dem Boden (3) und der Trennwand (2) zwei kreisförmige Aussparungen für das Abstellen von Getränken abgrenzen.

6. Abstellanlage für ein Kraftfahrzeug nach einem der Ansprüche 1 bis 5, **dadurch gekennzeichnet, dass** das Führungselement (12) der Aufnahme eine Nut umfasst, wobei das Führungselement (11) des Halters einen Vorsprung umfasst, der komplementär zur Form der Nut ist.

7. Abstellanlage für ein Kraftfahrzeug nach einem der Ansprüche 1 bis 6, **dadurch gekennzeichnet, dass** die Halterung (5) am Bein einen Vorsprung und die Halterung (10) am Tisch eine komplementäre Aussparung umfasst, wobei beide Halterungen ferner einen Teil der Bajonettverbindung zur Sicherung des Vorsprungs in der Aussparung aufweisen.

8. Abstellanlage für ein Kraftfahrzeug nach einem der Ansprüche 1 bis 7, **dadurch gekennzeichnet, dass** die Aufnahme (8) die Form eines Kegelstumpfs mit ovalen Grundflächen aufweist.
